# EUROPÄISCHE PATENTSCHRIFT

(11) **EP 1 167 654 B1**
(45) Veröffentlichungstag und Bekanntmachung des Hinweises auf die Patenterteilung: **15.08.2007**
(21) Anmeldenummer: 01109991.8
(22) Anmeldetag: 25.04.2001
(51) Int. Cl.: E04F 15/04, B27M 3/04, B27N 7/00

(54) **Fussbodenplatte**
Floor plate
Panneau de plancher

(30) Priorität: 01.07.2000 DE 10032204
(43) Veröffentlichungstag der Anmeldung: 02.01.2002
(73) Patentinhaber: Witex AG i.L., 32832 Augustdorf (DE)
(72) Erfinder: Kettler, Volker, 33824 Werther (DE)
(74) Vertreter: TER MEER - STEINMEISTER & PARTNER GbR

(56) Entgegenhaltungen:
- EP-A- 0 487 925
- GB-A- 2 121 424

## Beschreibung

Die Erfindung betrifft eine Fußbodenplatte, insbesondere Laminatpaneel, Parkettelement, Bodendiele oder dergleichen aus einem Holzwerkstoff, insbesondere einem hochverdichteten MDF- oder HDF-Fasermaterial, mit einer oberen Dekorschicht, einer unteren Gegenschicht, umlaufenden Kanten, insbesondere mit einer Verbindungsprofilierung zum Verbinden benachbarter Platten, und einer Kantenimprägnierung der umlaufenden Kanten.

Derartige Bodenplatten sind aus den Gebrauchsmustern 295 17 995 U1 und 296 10 462 U1 bekannt. In diesen Druckschriften wird eine Kantenimprägnierung auf die umlaufenden Kanten aufgebracht, die den Eintritt von Feuchtigkeit verhindern soll, die zum Aufquellen der Platten führen kann. Während die untere und obere Oberfläche derartiger Platten zumeist eine sehr stabile und verschleißfeste und im übrigen weitgehend feuchtigkeitsdichte Beschichtung aufweisen, tritt an den angeschnittenen, zumeist profilierten Kanten das ungeschützte Holzwerkstoffmaterial hervor. Hier kann daher Feuchtigkeit eindringen und zum Aufquellen einer Bodenplatte führen, da das verwendete Holzwerkstoffmaterial verhältnismäßig stark hygroskopisch ist.

Die EP 0 487 925 A1 zeigt einen Laminatfussboden, dessen Paneele aus einem Sperrholzkörper bestehen, der durch Außenschichten abgedeckt ist. Das gesamte Laminat ist an seiner Oberfläche mit einem ausgehärteten Holzbehandlungsöl getränkt. Ferner offenbart GB 2 121 424 A die Imprägnierung von Holzwerkstoffen mit Mitteln, die eine Flüssigkeitssperre bilden können und Fungizide oder Insektizide enthalten können. Diese Mittel liegen als wässrige Lösungen vor. Dieses Dokument bietet keine Möglichkeit, die Freisetzung des Schädlingsbekämpfungsmittels über einen langen Zeitraum hinweg zu verzögern.

Die EP 903 451 A2 beschreibt eine weitere Bodenplatte, deren umlaufende Kante zur Erzielung einer besseren Feuchtigkeitsbeständigkeit mit einem Dichtmittel imprägniert ist. Die Fußbodenplatten sollen entweder mit benachbarten Platten verklebt oder auch nicht verklebt sein. Eine Kleberbeschichtung wird in zahlreichen weiteren Schriften beschrieben.

Trotz dieser Kantenbeschichtungen, verbleiben Fugen zwischen den einzelnen Platten, in denen sich Staub und Schmutz sammeln können. Dies könnte durch eine dichte Verklebung und Versiegelung verhindert werden, jedoch wird häufig ein kleberfreies Verlegen vorgezogen. Dieses ist einfacher, verursacht keine Verschmutzung beim Verlegen, kann gegebenenfalls auch durch Laien geschehen und ermöglicht vor allem eine relativ einfache Wiederaufnahme eines Bodens, wenn Beschädigungen repariert werden müssen oder ein Wechsel des Bodens vorgesehen ist.

Der Erfindung liegt daher die Aufgabe zugrunde, Fußbodenplatten der obigen Art derart auszubilden, daß auch bei einem mit Fugen verlegten Fußboden die Ansammlung von Schädlingen aller Art in den Fugen über einen langen Zeitraum hinweg vermieden werden kann.

Diese Aufgabe wird erfindungsgemäß bei einer Fußbodenplatte der obigen Art dadurch gelöst, daß die Kantenimprägnierung ein Fungizid, Insektizid, Bakterizid, Pestizid, Desinfektionsmittel oder sonstiges Schädlingsbekämpfungsmittel enthält, welches in einer Trägersubstanz gespeichert oder gekapselt ist, die das Mittel erst in Abhängigkeit von einer bestimmten Feuchtigkeit, Temperatur, chemischen Reaktion oder mechanischen Einflüssen freigibt.

Die Kantenimprägnierung kann also beispielsweise mit einer Feuchtigkeitssperrschicht oder einer anderen Imprägnierung kombiniert sein. In diesem Zusammenhang soll "kombiniert" stets bedeuten, daß das Schädlingsbekämpfungsmittel mit einem einer anderweitigen Kantenimprägnierung dienenden, insbesondere feuchtigkeitsabweisenden Mittel vermischt ist.

Durch das Schädlingsbekämpfungsmittel soll vermieden werden, daß sich Pollen, Pilzsporen oder andere für die menschliche Gesundheit schädliche Mikroorganismen, die beispielsweise mit dem Hausstaub eingetragen werden können, in den Fugen entwickeln. Bekanntlich wird eine derartige Entwicklung durch Feuchtigkeit in der Regel gefördert, so daß es besonders zweckmäßig ist, daß das Schädlingsbekämpfungsmittel mit einer Flüssigkeitssperrschicht kombiniert wird, durch die verhindert wird, daß Feuchtigkeit in die poröse Struktur der Holzfaserplatte eindringt und sich ansammelt.

Unter Schädlingen sollen im vorliegenden Zusammenhang alle Stoffe oder Organismen verstanden werden, die die menschliche Gesundheit beeinträchtigen, so daß der Begriff des Schädlingsbekämpfungsmittels alle Arten von Gegenmitteln einschließen soll, die zur Bekämpfung der Wirkungen derartiger Stoffe oder Organismen geeignet sind. Schädlingsbekämpfungsmittel im vorliegenden Sinne sollen daher auch Antiallergica sein.

Dabei ist es bei der Bekämpfung von Organismen beispielsweise nicht notwendig, daß diese durch das Bekämpfungsmittel abgetötet werden. Es reicht vielmehr aus, wenn die Mittel die Entwicklung der Mikroben oder deren Fortpflanzungsfähigkeit unterdrücken oder hemmen oder in anderer Weise Einfluß auf deren gesundheitsschädigende Wirkung nehmen. So gibt es beispielsweise Mikrobiozide, die auf den Stoffwechsel von Bakterien dahingehend Einfluß nehmen, daß diese nicht mehr fähig sind, Nahrung aufzunehmen und sich damit auch nicht mehr vermehren können.

Andernfalls können Produkte eingesetzt werden, wie sie zum Beispiel als Desinfektionsreiniger im Haushalt bekannt sind, zum Beispiel Alkohole, Essig-oder Ameisensäuren, starke Laugen, insbesondere Chlorkalk (Hypochlorite), Aldehyde, Phenol-Derivate und quartäre Ammonium-Verbindungen oder aber Organozinn-Verbindungen.

Zum Vorbeugen gegen Schimmelbildung, Fäulnis und dergleichen sind Verbindungen basierend auf Isothiazolinon-Strukturen geeignet. Besonders bevorzugt ist, wie bereits erwähnt, die Verwendung auch dieser Schädlingsbekämpfungsmittel in Kombination/Abmischung mit einer auf Feuchtigkeitsschutz abzielenden Kantenimprägnierung.

Es liegt auf der Hand, daß nur solche Mittel verwendet werden können, die nicht ihrerseits die menschliche Gesundheit beeinträchtigen. Es muß sich also im wesentlichen um Mittel handeln, die beispielsweise für den Gebrauch im Haushalt zugelassen sind.

Im folgenden werden bevorzugte Ausführungsbeispiele der Erfindung anhand der beigefügten Zeichnungen näher erläutert.
Fig. 1 ist eine perspektivische Teildarstellung einer Fußbodenplatte mit einer für eine Nut-Federverbindung mit benachbarten Platten vorgesehenen umlaufenden Kante;
Fig. 2 ist ein senkrechter Teilschnitt durch die zu verbindenden Randbereiche zweier benachbarter Platten.

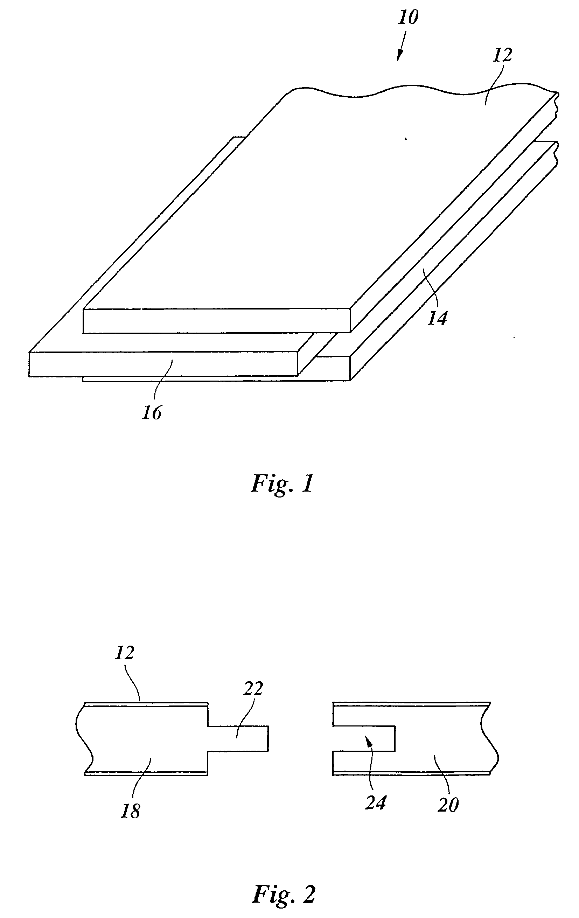

In Fig. 1 ist eine Fußbodenplatte insgesamt mit 10 bezeichnet. Die obere Oberfläche 12 dieser Platte weist beispielsweise eine Dekor-Beschichtung, in der Form einer Holzmaserung auf, die in der Regel weitgehend wasserdicht sein wird. Eine Gegenbeschichtung befindet sich auf der nicht dargestellten unteren Seite.

Die nach rechts in Fig. 1 gerichtete Kante ist mit einer Nut 14 versehen, während die Kanten auf der nach vorne und nach links gerichteten Seite der Fig. 1 eine vorspringende Feder 16 bilden.

Derartige Nut-Feder-Platten werden seit langem für Boden- und Wandtäfelungen verwendet. Sie halten bei Bodenbelägen die benachbarten Platten in vertikaler Richtung in bezug zueinander fest und verhindern, daß benachbarte Platten sich relativ zueinander in der senkrechten Richtung bewegen oder verziehen können. Bei heute weit verbreiteten Fußbodenpaneelen aus Holzwerkstoff-Paneelen sind die einfachen Nut- Federverbindungen weiter entwickelt worden zu Verbindungen, die zusätzlich eine Verriegelung in der horizontalen Richtung zwischen benachbarten Platten ergeben. Die Art dieser Kantengestaltung ist jedoch im einzelnen nicht Gegenstand der vorliegenden Anmeldung.

Fig. 2 zeigt die einander zugewandten Randbereiche zweier benachbarter Fußbodenplatten 18,20. Während die links in Fig. 2 gezeigte Fußbodenplatte 18 mit einer vorspringenden Feder 22 ausgestattet ist, befindet sich in der Kante der rechts liegenden Fußbodenplatte 20 eine Nut 24. Wenn die beiden Platten zusammengeschoben werden, wirken Nut und Feder in bekannter Weise zusammen.

Sofern die beiden Platten dabei nicht fugendicht verklebt und versiegelt werden, bildet sich zwischen den beiden Platten nach dem Verlegen eine nicht dargestellte Fuge, in die beispielsweise bei der Reinigung des Bodens mit Wasser oder anderen Flüssigkeiten oder auch aus der Luft Feuchtigkeit eindringen kann. Da es sich um Platten aus Holzwerkstoffen handelt, sind die angeschnittenen Kanten, die keinerlei Beschichtungen aufweisen, in mehr oder weniger starkem Maße hygroskopisch, so daß sie Feuchtigkeit ansaugen und festhalten. Aus diesem Grunde weisen die erfindungsgemäßen Fußbodenplatten 18 und 20 auf den gesamten Kantenflächen, vorzugsweise eine Feuchtigkeitssperrschicht auf.

In den beiden eingangs genannten Gebrauchsmustern der Anmelderin werden zahlreiche für die Herstellung dieser Sperrschicht geeignete Materialien, etwa Polyester-Epoxydacrylate oder Urethanharze und/oder Polyurethan-Polymere auf der Basis aliphatischer und/oder aromatischer Isocyanate sowie Öle, Wachse und Öl-Wachs-Gemische in Betracht gezogen. Die Materialien können aufgesprüht, aufgestrichen, aufgedruckt oder anderweitig aufgebracht werden. Sie können beim Aufbringen durch Lösungsmittel verdünnt sein, damit das Eindringen in die poröse Struktur der Holzwerkstoffe erleichtert wird. Bei Verwendung von natürlichen oder synthetischen Wachsen kann mit Erwärmung gearbeitet werden, die zum Schmelzen der Wachse führt. Es ist auch möglich, Stoffe zu verwenden, die sich mit Ultraschall oder ultraviolettem Licht oder durch Zusatz von oxidativ wirkenden Trocknungsmitteln (Sikkativen) härten lassen. Für Einzelheiten wird insoweit auf die genannten Gebrauchsmuster der Anmelderin Bezug genommen. Diese dem Feuchtigkeitsabschluß dienenden Kantenimprägnierungsmittel werden mit geeignete Schädlingsbekämpfungsmittel der zuvor geschilderten Art versetzt oder kombiniert.

Erfindungsgemäß sind die Schädlingsbekämpfungsmittel in einer Trägersubstanz gespeichert oder gekapselt und lösen sich aus diesen erst bei stärkerer Berührung mit Feuchtigkeit, erhöhten Temperaturen oder bestimmten chemischen Reaktionen oder mechanischer Belastung.

Das Wort "Schädlingsbekämpfungsmittel" wird hier in einem weiten Sinne verwendet. Es soll alle Mittel einschließen, die die Bekämpfung, Unterdrückung, Hemmung etc. von Mikroorganismen aller Art ermöglichen, die die menschliche Gesundheit beeinträchtigen können.

## Patentansprüche

1. Fußbodenplatte, insbesondere Laminatpaneel, Parkettelement oder Bodendiele oder dergleichen, aus einem Holzwerkstoff, insbesondere aus einem hochverdichteten MDF- oder HDF-Fasermaterial, mit einer oberen Dekorschicht, einer unteren Gegenschicht, umlaufenden Kanten, insbesondere mit einer Verbindungsprofilierung zum Verbinden benachbarter Platten, und einer Kantenimprägnierung der umlaufenden Kanten, **dadurch gekennzeichnet, daß** die Kantenimprägnierung ein Fungizid, Insektizid, Bakterizid, Pestizid, Desinfektionsmittel oder sonstiges Schädlingsbekämpfungsmittel enthält, welches in einer Trägersubstanz gespeichert oder gekapselt ist, die das Mittel erst in Abhängigkeit von einer bestimmten Feuchtigkeit, Temperatur, chemischen Reaktion oder mechanischen Einflüssen freigibt.

2. Fußbodenplatte nach Anspruch 1, **dadurch gekennzeichnet, daß** die Kantenimprägnierung aus einem Mittel zur Bildung einer Flüssigkeitssperrschicht besteht, mit dem ein Schädlingsbekämpfungsmittel vermischt ist.

3. Fußbodenplatte nach einem der vorhergehenden Ansprüche, **dadurch gekennzeichnet, daß** das Schädlingsbekämpfungsmittel auf der Basis eines im Haushaltsbereich verwendbaren Desinfektionsreinigers gebildet ist.

4. Fußbodenplatte nach einem der vorhergehenden Ansprüche, **dadurch gekennzeichnet, daß** das Schädlingsbekämpfungsmittel gebildet ist aus Alkohol, Essigsäure, Ameisensäure, starken Laugen, insbesondere Chlorkalk (Hypochlorite), Aldehyden, Phenol-Derivaten und quartären Amonium-Verbindungen oder aber Organozinnverbindung.

5. Fußbodenplatte nach einem der vorhergehenden Ansprüche, **dadurch gekennzeichnet, daß** das Schädlingsbekämpfungsmittel zur Verhinderung von Schimmelbildung, Fäulnis etc. aus Verbindungen, basierend auf Isothiazolinon-Strukturen besteht.

## Claims

1. Floor plate, in particular laminate panel, parquet element or floor board or similar, of a wood material, in particular of a highly compressed MDF or HDF fibre material, with a top decorative layer, a bottom opposite layer, circumferential edges, in particular with a connecting profile for connecting adjacent plates, and an edge impregnation of the circumferential edges, **characterised in that** the edge impregnation contains a fungicide, an insecticide, a bactericide, a pesticide, a disinfectant or another pest control agent which is stored or encapsulated in a carrier substance which only releases the agent in accordance with a certain moisture, temperature, chemical reaction or mechanical influences.

2. Floor plate according to Claim 1, **characterised in that** the edge impregnation consists of an agent for forming a liquid barrier layer with which a pest control agent is mixed.

3. Floor plate according to any one of the preceding Claims, **characterised in that** the pest control agent is formed on the basis of a disinfectant cleaner which can be used in the domestic field.

4. Floor plate according to any one of the preceding Claims, **characterised in that** the pest control agent is formed from alcohol, acetic acid, formic acid, strong lyes, in particular chlorinated lime (hypochlorites), aldehydes, phenol derivatives and quaternary ammonium compounds or organotin compounds.

5. Floor plate according to any one of the preceding Claims, **characterised in that** the pest control agent consists of compounds based on isothiazolinone structures to prevent the formation of mould, rot, etc.

## Revendications

1. Plaque de plancher, en particulier panneau lamifié, élément de parquet ou planche de plancher ou similaire, en un matériau de bois, en particulier en un matériau de fibres de moyenne densité ou haute densité fortement agglomérées, avec une couche décorative supérieure, une contre-couche inférieure, des bords périphériques, en particulier avec un profilage de liaison pour l'assemblage de plaques voisines, et une imprégnation des bords périphériques, **caractérisée en ce que** l'imprégnation des bords contient un fongicide, un insecticide, un bactéricide, un pesticide, un produit désinfectant ou un autre produit de lutte contre les parasites qui est stocké ou enfermé dans une substance de support laquelle libère le produit seulement en fonction d'une humidité, température, réaction chimique ou influence mécanique déterminée.

2. Plaque de plancher selon la revendication 1, **caractérisée en ce que** l'imprégnation des bords est constituée d'un produit pour former une couche de barrière aux liquides auquel est mélangé un produit de lutte contre les parasites.

3. Plaque de plancher selon l'une des revendications précédentes, **caractérisée en ce que** le produit de lutte contre les parasites est formé sur la base d'un détergent désinfectant qui peut être utilisé pour le ménage.

4. Plaque de plancher selon l'une des revendications précédentes, **caractérisée en ce que** le produit de lutte contre les parasites est formé d'alcool, d'acide acétique, d'acide formique, de lessive forte, en particulier de chlorure de chaux (hypochlorite), d'aldéhydes, de dérivés du phénol et de composés d'ammonium quaternaire ou encore d'un composé organo-stannique.

5. Plaque de plancher selon l'une des revendications précédentes, **caractérisée en ce que** le produit de lutte contre les parasites est constitué de composés à base de structures d'isothiasolinone, pour empêcher la formation de moisissures, la putréfaction, etc.
